# EUROPEAN PATENT SPECIFICATION

(11) **EP 3 895 540 B1**
(45) Date of publication and mention of the grant of the patent: **12.11.2025**
(21) Application number: 21168862.7
(22) Date of filing: 16.04.2021
(51) Int. Cl.: A01N 59/16, A01N 59/20, A01N 25/08, A01P 1/00

(54) **A FILLER COMPOSITION FOR PLASTIC AND A METHOD FOR MANUFACTURING A PLASTIC ARTICLE COMPRISING THEREOF**
FÜLLSTOFFZUSAMMENSETZUNG FÜR KUNSTSTOFFE UND VERFAHREN ZUR HERSTELLUNG EINES DIESE ENTHALTENDEN KUNSTSTOFFARTIKELS
COMPOSITION DE REMPLISSAGE POUR PLASTIQUES ET PROCÉDÉ DE FABRICATION D'UN ARTICLE EN PLASTIQUE LE CONTENANT

(30) Priority: 16.04.2020 PL 43356120
(43) Date of publication of application: 20.10.2021
(73) Proprietor: Centrum Badan i Rozwoju Technologii dla Przemyslu S.A., 00-645 Warszawa (PL); Hanplast Sp. z.o.o., 85-862 Bydgoszcz (PL)
(72) Inventor: Putynkowski, Grzegorz, 00-193 Warszawa (PL); Socha, Robert, 32-091 Michalowice (PL); Balawender, Pawel, 31-223 Krakow (PL); Sapeta, Grzegorz, 34-326 Pietrzykowice (PL); Iwanek, Sylwester, 34-326 Pietrzykowice (PL); Majchrowicz, Aleksander, 86-032 Niemcz (PL)
(74) Representative: Kancelaria Eupatent.pl Sp. z o.o.

(56) References cited:
- EP-A1- 3 461 336
- WO-A1-2019/230214
- WO-A1-95/10940
- JP-A- 2006 130 716
- KR-A- 20190 089 665
- US-A1- 2015 292 126
- HODEK JAN ET AL: "Protective hybrid coating containing silver, copper and zinc cations effective against human immunodeficiency virus and other enveloped viruses", BMC MICROBIOLOGY, vol. 16, no. 1, 1 December 2016 (2016-12-01), XP093083196, Retrieved from the Internet <URL:https://bmcmicrobiol.biomedcentral.com/counter/pdf/10.1186/s12866-016-0675-x.pdf> DOI: 10.1186/s12866-016-0675-x
- KUSCER ET AL: "The effect of the valence state of titanium ions on the hydrophilicity of ceramics in the titanium-oxygen system", JOURNAL OF THE EUROPEAN CERAMIC SOCIETY, ELSEVIER, AMSTERDAM, NL, vol. 28, no. 3, 21 November 2007 (2007-11-21), pages 577 - 584, XP022355527, ISSN: 0955-2219, DOI: 10.1016/J.JEURCERAMSOC.2007.07.014

## Description

### TECHNICAL FIELD

The object of the invention is a filler composition for plastics, in particular thermo-processable plastics: thermoplastics or thermosets, as well as a method of processing plastics containing, in their composition, the above-mentioned filler composition in order to obtain shaped articles, inter alia, in the form of plastic overlays with antiseptic properties, including those reducing or destructing micro-organisms, including viruses.

### BACKGROUND

Elements of building equipment, means of communication and urban space used on a daily basis, such as, for example, bathroom and kitchen fittings, elements of joinery equipment, handrails, sanitary devices, electrical connectors, functional elements of means of public transport and public space, etc. are places, through which microbes and viruses can potentially be exchanged between humans. A process leading to at least a reduction of the amount, and even complete removal or destruction, of micro-organisms, including viruses, from the above-mentioned elements of equipment during standard cleaning is decontamination. Among the methods of decontamination, there are two common use methods:
- sanitisation - removal of visible contamination and dirt, and most of micro-organisms wherewith,
- disinfection - a process by which vegetative forms of micro-organisms are destroyed (bacterial spores and viruses remain).

The research conducted during the SARS-CoV-2 virus pandemic (discussed in Neeltje van Doremalen, James O. Lloyd-Smith, Vincent J. Munster "Aerosol and surface stability of HCoV-19 (SARS-CoV-1 2) compared to SARS-CoV-1", The New England Journal of Medicine doi: 10.1056/NEJMc2004973) shows that the virus is able to persist for up to 72 hours on such surfaces as plastic or stainless steel. In the case of copper, this time was reduced to 4 hours.

Due to the long duration of the virus on the above-mentioned surfaces and the number of people who may have contact with them, reduction of persistence of the virus through standard sanitisation and disinfection procedures is in practice very difficult due to the high intensity of exploitation and therefore the need to engage significant resources to keep the surfaces in question clean. Therefore, it is reasonable to protect these elements with means that can significantly shorten the time the virus persists on their surface or inhibit its further spread.

In the patent literature, various compositions in the form of additives incorporated into plastics are known.

WO9415463 and US5180585 describe inorganic powders composed of particles having antibacterial properties. Each grain has a core made of TiO₂ in crystalline form of anatase or rutile, and a two-layer core shell. The size of the core is in the range of: 0.1 - 100 microns. The first - inner layer of the said shell has antimicrobial properties and contains the elements of: silver with copper and/or zinc - in the metallic form or in the form of various compounds: oxides, halides, sulphides or metallic alloys, enabling the release of silver from the material of the inner shell into the environment, in the silver (ionic) form and its amounts resulting in its antimicrobial effect. The second - outermost layer of the shell has a barrier function - to obtain adequate silver release over time, and is made of such materials as silica, silicates, borosilicates, aluminosilicates, aluminium oxide, aluminium phosphate, or mixtures.

WO2005072680 describes shaped articles made of plastic as well as film-forming compositions in the form of paints with the addition of white pigment: TiO₂ or ZnO doped with metal ions: Mn or V - performing the function of active sites: reducing agents for capturing radicals generated by illuminating these materials with UV radiation. The addition of this kind of metals (Mn, V) to the mass of plastic or paint therefore increases the resistance of these materials to UV ageing.

On the other hand, US2009188408 describes a bactericidal paint composition with the addition of a filler consisting of inorganic particles, each grain having a core of inorganic material such as: chalk, calcite, calcium carbonate, dolomite, diatomite, mica or barite. The particle cores, in turn, are covered with sub-micron particles of metal and/or its salts: gold, platinum, silver and/or copper. The paint also contains a white pigment: TiO₂ powder. In this solution, the metals are therefore deposited on an inorganic carrier: the core, moreover, this composition does not contain zinc compounds in its set of ingredients.

WO2016120900 describes a method of imparting self-cleaning and self-sanitising properties to leather surfaces, wherein in a first step, a first film-forming composition which is an aqueous dispersion containing: a polymer, a filler, a flow aid additive, a cross-linking compound, an antioxidant compound, is applied onto the target surface, and said composition is cured, and in a second step, a second composition containing in its set of ingredients: an auxiliary water-based flow aid additive, a silicone emulsion, a solvent-based aliphatic prepolymer, a photocatalyst compound, a hydrophobic agent, a powder formulation with biocidal activity, and solvents and/or wetting agents and/or dispersing agents, and/or anti-foaming agents, is applied onto the cured composition. The obtained effect of self-cleaning and self-sanitation of the formed coating is achieved due to the presence, in its set of ingredients, of powders consisting of zeolite particles with deposited silver ions and/or copper ions or organic compositions: organic biocides with a binder based on organic or silicate resins with organic modification *("siloxane resins having an organic modification"*) and, furthermore, titanium dioxide in the amount of 1.58%, as a photocatalytic compound providing a self-cleaning effect. As described in WO2016120900, pages 3 - 4, the self-cleaning effect is obtained in the following manner: *"(...) mechanism of action is based on the moisture contained in the air and on a fraction of the solar light (from 300 to 400 nm) to produce reactive oxygen species that react with organic molecules of the contaminant agents by means of peroxidation mechanisms (...) titanium dioxide to form hydroxyl radicals (...) the radical species that arise in the presence of light react with the peptidoglycan, which constitutes the bacterial cellular wall.(...)".* Therefore, in this composition, TiO₂ acts as a site for oxidising organic compounds, thus achieving the self-cleaning effect of the surface.

PL410187 describes the process of intentional degradation of polyolefins in the presence of TiO₂ under exposure to UV irradiation as a method of plastics disposal. However, this document does not contain information on the effect of TiO₂ on antiseptic properties of polyolefin shaped articles.

PL420689 describes an antiseptic hydrophilic filler in the form of a powder, containing, in its set of ingredients, silver nanoparticles deposited on a carrier: cellulose acetate.

WO2019230214 describes an agent having an effect similar to an effect realized under intermittent irradiation with light over a long period of time even when not irradiated with light, the agent moreover making it possible to accomplish this effect in a short period of time.

KR20190089665 describes a method for producing an inorganic antibacterial agent that involves mixing sericite powder, colloidal silica sol, and specific inorganic components in purified water, adding antibacterial metal components, heating, filtering, drying, sintering, and grinding.

The publication "Protective hybrid coating containing silver, copper and zins cations effective against human immunofeficiency virus and other enveloped viruses" (by Hodek Jan et al, in BMC Microbiology, vol. 16 no. 1) describes hybrid coatings that show virucidal activity against HIV and other enveloped viruses thus providing further findings towards development of broad-spectrum antimicrobial coating suitable for surfaces in healthcare settings.

The publication "The effect of the valence state of titatium ions on the hydrophilicity of ceramics in the titanium-oxygen system" (by Kuscer et al, in Journal of the European Ceramic Society, vol. 28, no. 3, pages 577-5847) describes ceramics from the titanium-oxygen system that were prepared by sintering TiO2 and Ti2O3 powders at 1400 °C in air or in Ar/H2 (7%). The surface compositions of the TiO2, the non-stoichiometric TiO2-x and the Ti2O3 ceramics, studied with X-ray photoelectron spectroscopy, are discussed in terms of their chemical composition, with particular emphasis on the valence state of the titanium ions.

### SUMMARY OF THE INVENTION

The present invention relates to a filler composition, a method for preparing the filler composition, a plastic comprising the filler composition, and a shaped article and a method for producing thereof according to the appended claims.

The present disclosure relates to a filler composition for plastic, comprising particles with silver (Ag) comprising not less than 0.1 wt.% of silver, particles with copper (Cu) comprising not less than 0.5 wt.% of copper, and particles with zinc (Zn) comprising not less than 0.5 wt.% of zinc, the particles having a particle size of 50 nm to 10 µm. The said composition characterises in that said filler composition further comprises at least 10 wt.% of particles consisting essentially of titanium oxide in the crystalline form of anatase with oxygen vacancies, according to Formula I:

TiO₂₋ₓ **Formula I**

wherein: x represents a number of oxygen vacancies, wherein x has a value of 0.001 to 0.1, wherein the titanium oxide (TiO₂₋ₓ) particles have a particle size of 50 nm to 10 µm.

The composition of the above-mentioned set of ingredients, due to the content of the particles with zinc (Zn), the particles with silver (Ag), the particles with copper (Cu), and the TiO₂₋ₓ particles in the above set of ingredients, shows an improved antiseptic effect, including bactericidal effect. The particles constituting the ingredients of the filler composition dispersed in a matrix of polymer plastic provide improved hydrophilisation of a surface of said plastic.

The use of TiO₂₋ₓ in the crystalline form of anatase with an appropriate proportion of oxygen vacancies - as the particles that are separated from the particles with: Ag, Cu and Zn, respectively, which are most preferably non-doped, provided an improved antiseptic effect of the filler composition. The separate TiO₂₋ₓ particles contained in the filler composition are dark grey in colour, so it is not a typical white pigment. This provides an improvement in the hydrophilicity, including a suitable water contact angle, of the plastic surface containing the filler composition as the plastic ingredient, of at most 30°, and more preferably at most 15°, which is essential for the antiseptic action of this composition, the mechanism of which is discussed in detail below, taking into account chemical reactions.

Due to the developed set of ingredients, including the presence of the particles with Ag, the particles with Cu and the particles with Zn, the separate TiO₂₋ₓ particles, perform, in the system of filler composition - plastic, a function of sites allowing the process of wetting the surface of this plastic to take place by hydroxylating the surface of titanium oxide particles (i.e. the introduction of hydroxyl groups (-OH)) due to water splitting on this surface, which provides an appropriate environment for reactions of the other substances with micro-organisms: including Ag⁺, Cu²⁺ and Zn²⁺ from the particles of appropriate metals. In the developed set of ingredients of the filler composition, the TiO₂₋ₓ particles, in the form of anatase, therefore do not perform a biocidal function, but provide improved conditions for the formation of a suitable environment for said reactions, resulting in higher efficiency of reactions releasing Ag⁺, Cu²⁺ and Zn²⁺ ions. The above effect of TiO₂₋ₓ, which was achieved by the appropriate set of ingredients of the filler composition, is important and necessary in order to obtain a biocidal effect on hydrophobic surfaces of plastics and to release ions by means of the spill-over effect of the reactants. Thus, the TiO₂₋ₓ particles used in the set of ingredients of the composition perform the function of an oxidant at the atomic level, and - at the same time - of an agent ensuring adequate hydrophilisation of the plastic surface, which is necessary for the proper (antiseptic) action of the system of filler composition - plastic. Thus, the hydrolysis taking place on the surface of the titanium oxide (TiO₂₋ₓ) particles results, to a small extent, at the molecular level, in degradation of the filler composition-polymer system in order to release ions: Ag⁺, Cu²⁺ and Zn²⁺.

Moreover, the oxygen vacancies present in the structure of TiO₂₋ₓ promote formation of free radicals supporting, through the oxidation mechanism, the antiseptic properties of the composite material that comprises the filler composition in the polymer plastic.

The advantage of using the particles with metals having a particle size not smaller than 50 nm is the possibility of using the filler composition as an additive for various plastics, and also an improved thermal resistance of the filler composition, e.g. the resistance to high temperatures applied in plastic injection-moulding processes. Among others, the particles with silver, including the particles consisting essentially of metallic silver, do not degrade/coalesce, thereby, they do not lose their form in conditions of high-temperature processing of plastic containing the above filler composition as the plastic ingredient, including the conditions of high- or low-pressure injection-moulding. As a result, the finished product in the form of a plastic article shows antiseptic properties. Moreover, the particles smaller than 50 nm may be cytotoxic.

On the other hand, the use of the particles larger than 10 µm would make it substantially impossible to process the plastics comprising the filler composition by injection moulding because the particles with diameters larger than 10 µm may damage the injection mechanisms in injection moulding machines.

For the developed set of ingredients and form of the filler composition and its form, the metals contained in the particles are not deposited on carriers, for example inorganic ones. Said particles contained in the set of ingredients of the composition are materials constituting the carrier itself and these materials do not require additional deposition on carriers.

The particles are made entirely of a given metal: Ag, Zn, Cu in its metallic form and/or bonded form of metals compounds, preferably in the form of oxide and/or sulphate (VI), and/or nitrate (V) metal(s) compound(s). The particles with a metal: Zn, Ag, Cu, as well as the TiO₂₋ₓ particles are not covered with barrier coatings, neither are they in the form of core/shell systems because this would impair the antiseptic effectiveness of the filler composition when the filler composition is comprised in the plastic. However, the particles with suitable metals: Cu, Ag may contain a passive layer, i.e. a thin metal oxide layer, which is typically formed on the surface of the given particle (e.g. the particles with Zn, the particles with Ag, the particles with Cu) upon its contact with oxygen.

As a result, a filler composition with a relatively simple set of ingredients was obtained. This reduces its production costs, as the operations of encapsulation or deposition of metals or ions on carriers are unnecessary in the case of preparing the filler composition according to the invention.

The filler composition may contain the particles with silver in the form of metallic silver and/or silver (I) oxide, and/or silver (I) nitrate (V). The particles of such set of ingredients ensure: effective antiseptic action, provided that there are, preferably in the vicinity of the particles with silver, the particles with copper and the particles with zinc since the zinc and copper, contained in the filler composition, which limit the leaching of silver from the plastic containing said filler composition; and furthermore, on the particles with copper and on the particles with zinc, metallic silver is released as a result of the cementation process (i.e. a spontaneous electrochemical process in which ions of a more noble metal are deposited on a less noble metal, thereby displacing it), which takes place as part of the above-mentioned reactions within the composite containing the filler composition.

The filler composition may contain the particles with copper in the form of metallic copper and/or copper (II) oxide, and/or copper (II) sulphate (IV). The particles of this set of ingredients ensure: effective antiseptic action of the filler composition, for the reaction environment that allows copper to be converted into copper ions. For copper, the ionic state is achieved if there are particles of titanium oxide (TiO₂₋ₓ) in the vicinity of the particles with copper, thereby increasing the hydrophilicity of the surface of this particle, i.e. the ability to wet its surface with water, which is provided by the set of ingredients of the filler composition. The presence of the particles with zinc allows the metallic copper to be released on the surface of the particles with copper as a result of the cementation process.

The composition may contain the particles with zinc in the form of metallic zinc and/or zinc (II) oxide. The particles of this set of ingredients ensure: effective antiseptic and biostatic/cytostatic action, contributing to the inhibition of the growth of micro-organisms. The presence of the titanium oxide (TiO₂₋ₓ) particles provides an appropriate environment for this process.

The composition comprises silver (Ag), copper (Cu), zinc (Zn) and titanium oxide (TiO₂₋ₓ), in amounts for which the expression of Formula II is satisfied:

2 ≤ (([Cu]·Rb)/([TiO₂₋ₓ]·Ra))+(([Zn]·Rc)/([TiO₂₋ₓ]·Ra))+(([Ag]·Rd)/([TiO₂₋ₓ]·Ra)) ≤ 5 **Formula II**

wherein:
2, 5 - numerical values;
[Cu], [Ag], [Zn], [TiO₂₋ₓ] - concentrations of copper (Cu), zinc (Zn), silver (Ag) and titanium oxide (TiO₂₋ₓ), respectively, in the filler composition, expressed in [wt.%],
Ra, Rb, Rc, Rd - variables representing:
   Ra = 4·In[TiO₂₋ₓ]; Rb = 15·In[Cu]; Rc = 5·In[Zn]; and Rd = 20·In[Ag].

The composition having the above set of ingredients exhibits an appropriate antiseptic action against bacteria, viruses and fungi.

The composition may comprise the particles with silver (Ag) and/or the particles with copper (Cu), and/or the particles with zinc (Zn) comprise the metal(s) in a metallic form. The advantage of this is an improved effectiveness in fighting bacteria, viruses and fungi; the possibility of introducing the filler composition into a plastic masterbatch processed by high- or low-pressure injection-moulding, in the production of plastic articles; the further advantage of this solution is a homogeneous distribution of the particles of the filler composition in the volume of the plastic.

The composition may comprise the particles with silver and/or the particles with copper, and/or the particles with zinc comprise the metal(s) in a bonded form further comprising at least one non-metallic element selected from the group consisting of oxygen (O), carbon (C), sulphur (S), nitrogen (N), phosphorus (P), and chlorine (CI). The advantage of this is an improved effectiveness in fighting bacteria, viruses and fungi; an appropriate distribution of the particles of the filler composition in the volume of the plastic; surface segregation, i.e. increased concentration of the filler composition particles on the surface of the plastic - relative to its volume; the possibility of adding the filler composition directly into a granulate, without the need to make a masterbatch of plastic to be processed by high- or low-pressure injection-moulding, in the production of plastic shaped articles.

The present disclosure further relates to a method for preparing a filler composition wherein, to obtain an antiseptic properties, the method comprises mixing together particles with silver (Ag), each comprising not less than 0.1 wt. % of silver, particles with copper (Cu), each comprising not less than 0.5 wt. % of copper, particles with zinc (Zn), each comprising not less than 0.5 wt. % of zinc, and particles consisting essentially of titanium oxide (TiO₂₋ₓ), having a particle size of 50 nm to 10 µm, and other properties as mentioned with respect to the aforementioned filler composition, in amounts for which the expression of Formula II is satisfied:

2 ≤ (([Cu]·Rb)/([TiO₂₋ₓ]·Ra))+(([Zn]·Rc)/([TiO₂₋ₓ]·Ra))+(([Ag]·Rd)/([TiO₂₋ₓ]·Ra)) ≤ 5 **Formula II**

wherein: 2, 5 - numerical values; [Cu], [Ag], [Zn], [TiO₂₋ₓ] - concentrations of copper (Cu), zinc (Zn), silver (Ag) and titanium oxide (TiO₂₋ₓ), respectively, in the filler composition, expressed in [wt.%], Ra, Rb, Rc, Rd - variables representing: Ra = 4·In[TiO₂₋ₓ]; Rb = 15·In[Cu]; Rc = 5·In[Zn]; Rd = 20·In[Ag].

The composition thus obtained exhibits an appropriate antiseptic action against bacteria, viruses and fungi.

The present disclosure also relates to a plastic comprising the filler composition that is described above, in an amount of 1 to 70 wt.% of the plastic mass. The plastic with the addition of such the filler exhibits greater hydrophilicity of its surface, thanks to which metal ions: Ag, Cu, and Zn, with biocidal activity, are more effectively generated.

Preferably, the plastic is in the form of a composite having a polymer as a matrix and the filler composition dispersed within the matrix. As a result, an even antiseptic effect is achieved on the surface of the plastic. In the present specification, a composite is understood as a heterogeneous mixture, i.e. the mixture of the matrix (which is the polymer matrix) in which w the other solid ingredients are dispersed between the matrix items, and thus dispersed within the polymer matrix, regardless of the functions performed by these ingredients.

Preferably, the polymer matrix comprises, as its ingredients, a polyester resin and/or an epoxy resin, and/or polypropylene, and/or polyamide, and/or polylactide, and/or polyethylene, and/or polycarbonate, and/or polystyrene, and/or polyurethane, and/or polyester, and/or polyacrolein, and/or polyvinyl chloride, and/or polybutadiene, and/or copolymers thereof. The advantage of the above is the obtained composite having antiseptic properties by enabling the surface segregation (i.e. the segregation on the surface of the composite article) of the ingredients of the filler composition introduced into the polymer matrix; or obtaining a homogeneous ingredients of the filler composition.

The present disclosure also relates to a shaped article comprising at least on its surface, or is entirely made of the plastic with the above filler composition.

Such shaped articles can be used as overlays on various surfaces or products, providing their antiseptic properties.

Said overlays can comprise a layer of self-adhesive material. Thanks to this, the overlay can be conveniently and quickly attached to various surfaces or usable elements, for example door handles, handles for shopping trolleys, etc.

Said shaped article may be deformable. This makes it easier to adjust to the curvature of the surface on which it is applied.

The shaped article may be flexible. Thus, it be used repeatedly.

The present disclosure also relates to a method of producing a plastic shaped piece, wherein a mixture of ingredients for a thermoformable, i.e. thermoplastic or thermosetting plastic (e.g. polyester resin and/or epoxy resin, and/or polypropylene, and/or polyamide, and/or polylactide, and/or polyethylene, and/or polycarbonate, and/or polystyrene, and/or polyurethane, and/or polyester, and/or polyacroleines, and/or polyvinyl chloride, and/or polybutadiene, and/or their copolymers) is combined with the filler composition described above and then the whole is processed by injection method. Such a technique is feasible due to the set of ingredients of the filler composition which is resistant to injection conditions - high temperatures and/or pressures, without losing its antiseptic properties under these conditions.

Preferably, the whole is processed by high-pressure injection or low-pressure injection. The advantage of this is: the ease of obtaining a plastic with a homogeneous distribution of particles of the filler composition within the volume of the plastic and/or allowing surface segregation of the ingredients of the filler composition introduced into the mass of this plastic; in addition: obtaining antiseptic properties of the surface of the plastic; the possibility of carrying out the process with or without the use of a masterbatch for processing the plastic.

### BRIEF DESCRIPTION OF THE DRAWINGS

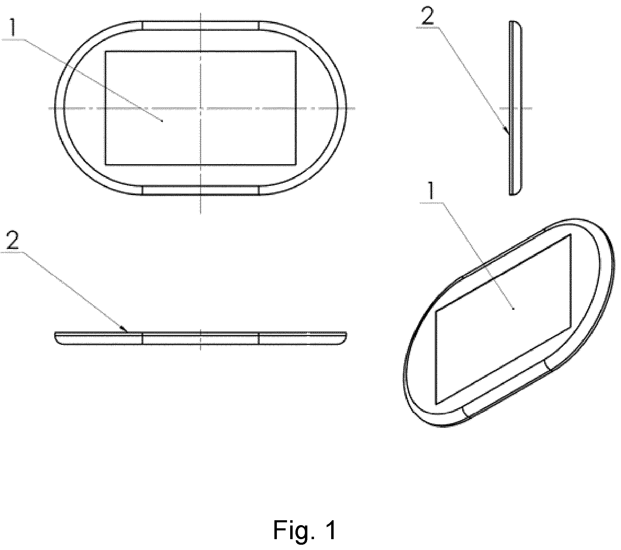

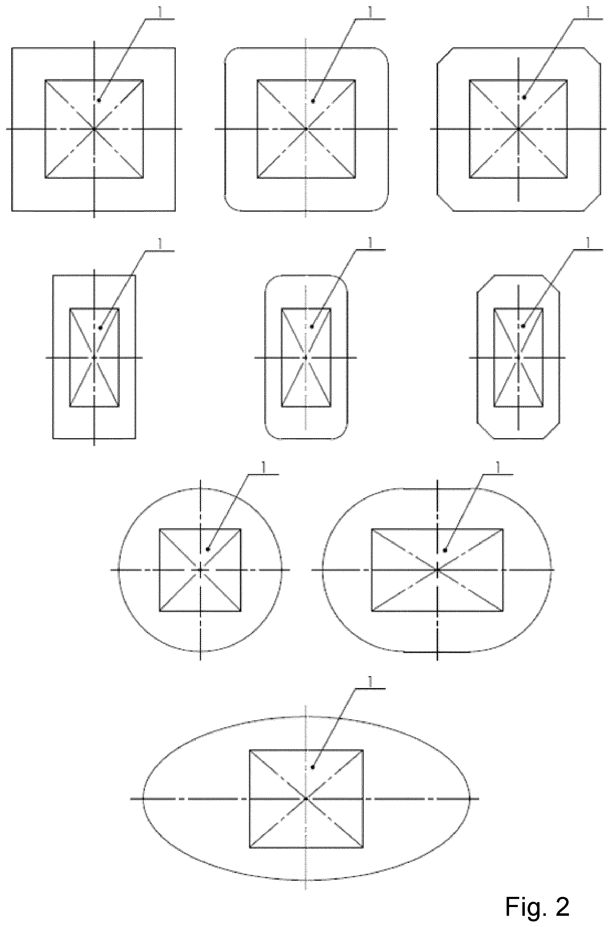

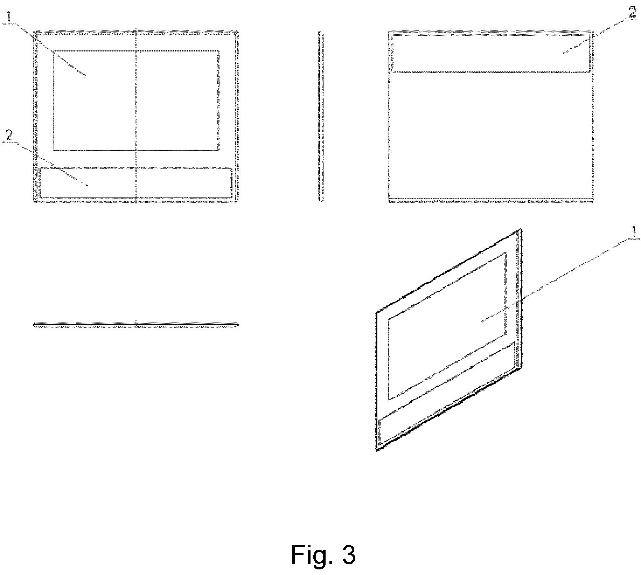

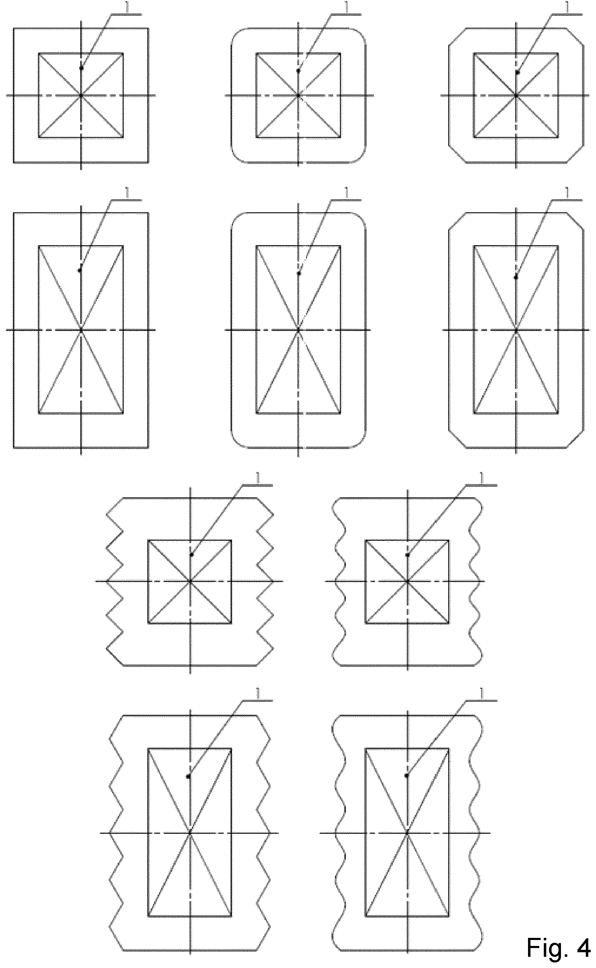

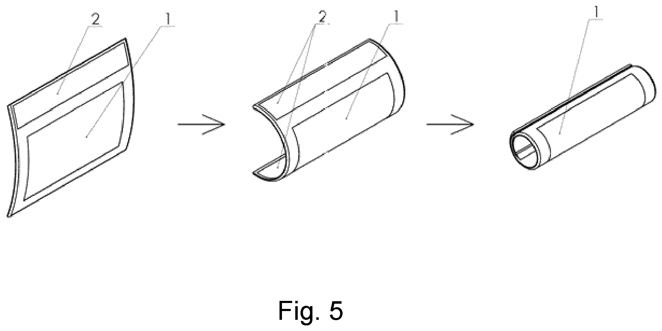

The object of the invention is shown in its embodiments in a drawing, in which Figs 1-5 show various embodiments of shaped articles, made of a plastic containing a filler composition in its set of ingredients, in the form of overlays for everyday objects.

### DETAILED DESCRIPTION OF EMBODIMENTS

An important feature of the invention is the use, in the set of ingredients of the filler composition, of titanium dioxide (TiO₂₋ₓ) with oxygen vacancies - in the crystalline form of anatase, and solid powders consisting of particles with metals (Ag, Zn, and Cu), which allows improvement of hydrophilic properties of the material and generation of ions of metals: silver, copper and zinc, by activating the process of electrochemical surface corrosion at the junction of bimetallic connections: between particles of various metals, or a metal deposited on another metal as a result of cementation, and/or at the junction of oxide connections. The role of said connections is the slow and controlled release of silver, copper and zinc ions in the presence of moisture, including that coming from air, sweat or other secretions, due to the improvement of the hydrophilicity of the surface of the plastic comprising said filler composition due to the use of separate TiO₂₋ₓ particles (with oxygen vacancies). For this reason, the filler composition - contained in the polymer matrix of the plastic, and preferably evenly dispersed therein, at least partially (e.g. at the surface of the plastic shaped article) enables an effective antiseptic action.

The biocidal action of silver, copper and zinc is related to the susceptibility of silver, copper and zinc ions to the formation of relatively stable chemical bonds with sulphur of disulphide bridges. Such action also interferes with the primary structure of proteins, causing defects at the molecular level and disrupting the process of RNA replication or transcription, resulting in the stoppage of the mechanism of replication of populations of bacteria, viruses and fungi. Silver, copper and zinc in their elemental (metallic) state, however, do not exhibit the above action or only exhibit it locally (contact action), which is shown by the ions. The process of operation of the presented system is illustrated by the following series of reaction equations.

Water being adsorbed on the surface of particles with metals (Ag, Cu, Zn), e.g. covered with an oxide layer, e.g. with a passivating layer, causes dissolution and hydrolysis of the oxides, resulting in ions present on the surface:

H₂O + Ag₂O = 2Ag⁺ + 2OH⁻

H₂O + CuO = Cu²⁺ + 2OH⁻

H₂O + ZnO = Zn²⁺ + 2OH⁻

For the embodiments where the particles with metals (Ag, Zn, Cu) do not contain such oxides - as in the reactions above, water molecules are also adsorbed on the surface of the particles as the above reactions are shown as examples.

After adsorption of water molecules on the surface of the particles with Ag, Cu and Zn, metal oxides (e.g. passivating layer for particles containing metals in their metallic form) are dissolved, or salts - when salts of these metals (e.g. metal sulphates or nitrates) are present in said particles - are dissolved, or, after the adsorption of water on the surface of the particles with metals, these metals can be oxidised to metal oxides and then dissolved as described above.

The dissolution processes in each of the above cases lead to the release of ions of metals: Zn, Cu and Ag. Metal ions with a higher electrochemical potential displace metals with a lower potential by being deposited on their surface:

2Ag⁺ + Cu = 2Ag + Cu²⁺

2Ag⁺ + Zn = 2Ag + Zn²⁺

Cu²⁺ + Zn = Cu + Zn²⁺

Ions present on the surface react with disulphide bridges, thereby causing their degradation:

Ag⁺ + -S-S- = Ag-S- + S-

Cu⁺ + -S-S- = -S-Cu-S-

Zn⁺ + -S-S- = -S-Zn-S-

The biocidal action of the TiO₂₋ₓ particles results from the presence of relatively stable oxygen vacancies (Vₒ⁺) in the TiO₂₋ₓ structure, which are then used to oxidise organic compounds because of the promotion of radical formation. The oxidation ability is further enhanced by the presence of metal ions present on the surface of TiO₂₋ₓ particles, i.e. as a result of diffusion of these metal ions in a thin water film adsorbed on the hydrophilic surface of the plastic, which is the highest for silver lying at the edge of the TiO₂₋ₓ conductivity band. The ability to oxidise organic compounds with radicals (·OH) generated on the TiO₂₋ₓ surface is described by the following reaction equations:

TiO₂₋ₓ + hv = xV_{O}⁺(present in TiO₂₋ₓ) + e⁻

V_{O}⁺ + H₂O = ·OH + H⁺

·OH + organic compounds = yCO₂ + zH₂O

where: Vₒ⁺ represents oxygen vacancies present in TiO₂₋ₓ

Thus, in the present filler composition, the addition of TiO₂₋ₓ in the crystalline form of anatase, in the form of separate TiO₂₋ₓ particles ensures adsorption of water on the surface of the TiO₂₋ₓ particles which tend to agglomerate, as a result of which it is possible to generate metal ions from their oxides or other compounds on the surface - as described above. Thus, the formed ions are initially released on the surface of the particles containing said metals, and the water being adsorbed on the TiO₂₋ₓ particles allows their diffusion on the surface of shaped articles made of a plastic containing, in its set of ingredients, the filler composition in the amount of 1-70 wt.%, and preferably in the amount of 10 - 70 wt.%. The formed metal ions with a higher electrochemical potential displace metals with a lower potential by being deposited on their surface - according to the reactions discussed above. For this reason, in order to effectively and efficiently release ions of a biocidal nature, the present filler composition may comprise metal particles coated with a layer of their oxides, for example the Ag particles are preferably coated with a layer of Ag₂O, and distinct TiO₂₋ₓ particles.

The size of individual particles with metals is in the range of 50 nm to 10 µm. Equally, the size of separate TiO₂₋ₓ particles should be in the range of 50 nm - 10 µm.

The filler composition is introduced into the selected plastic such that the composition is as homogeneously dispersed as possible throughout the polymer matrix of the plastic.

For example, the filler composition can be introduced into granulate of thermoplastic and/or thermosetting plastic, preferably containing a polyester resin and/or epoxy resin, and/or polypropylene, and/or polyamide, and/or polylactide, and/or polyethylene, and/or polycarbonate, and/or polystyrene, and/or polyurethane, and/or polyester, and/or polyacroleines, and/or polyvinylchloride, and/or polybutadiene, and/or their copolymers, or a suitable prepolymer, which are then processed by high-pressure or low-pressure injection-moulding in order to obtain moulded articles containing a dispersion of the filler composition particles in the polymer matrix. The shaped articles may thus be injection mouldings that constitute overlays for everyday objects, as discussed below. The filler composition can also be added to epoxy or polyester resins intended for the production of various shaped articles from them: overlays or other elements, for example overlay components. The filler composition can also be added to a mixture of resins and thermoplastic or thermosetting polymers intended for processing by low-pressure thermoforming to produce shaped articles in the form of overlays or other elements, for example overlay components.

The addition of the filler composition to the plastic mixture is carried out successively - in a solid or liquid form of plastic, by means of mechanical and/or pneumatic dispensers, so as to disperse all the particles of the filler composition in the matrix. Mechanical dosing is performed by screw and/or drawer, and/or belt feeders and/or pneumatically into the stream of plastic, resin or prepolymer granulate. The filler composition is added to the plastic before or during the process of moulding of the shaped articles. The temperature of the moulding process may be 200°C or higher. The moulding pressure may be 20 bar or it may be higher.

The total content of the filler composition should be in the range of 1-70 wt % of total plastic mass. On the other hand, the proportion of TiO₂₋ₓ particles in the filler composition should not be smaller than 10 wt% , in addition, the filler composition may contain particles with metals (Ag, Zn, Cu) in a metallic form or in a bonded form, i.e. chemical compounds containing, apart from a given metal, also O, C, S, N, P, Cl or I, i.e. oxides, carbonates, sulphates, nitrates, phosphates, chlorides and iodides, and mixtures of various chemical compounds. Exemplary sets of ingredients of the filler compositions for plastics are shown below.

Exemplary filler compositions converted to the mass fraction of an element.

### Example 1 - filler composition:

particles consisting essentially of Ag (coated with a passive layer: Ag₂O) - 1 wt.% of the filler composition, in the form of metal, particle diameter of 1 µm;
particles consisting essentially of Cu (coated with a passive layer: CuO) - 30 wt.% of the filler composition, in the form of metal, particle diameter of 1 µm;
particles consisting of ZnO - 30 wt.% of the filler composition, particle diameter of 3 µm;
particles consisting of TiO₂₋ₓ - 39 wt.%, particle diameter of 20 nm.

The composition satisfies the expression according to the formula II:

(([Cu] ·Rb)/([TiO₂₋ₓ]·Ra))+(([Zn] ·Rc)/([TiO₂₋ₓ] ·Ra))+(([Ag] ·Rd)/([TiO₂₋ₓ] ·Ra)) = 3,35

### Example 2 - filler composition:

particles AgO - 1 wt.% of the filler composition, particle diameter of 100 µm;
particles consisting essentially of Cu (coated with a passive layer: CuO) - 20 wt.% of the filler composition, particle diameter of 3 µm;
particles consisting of ZnO - 40 wt.% of the filler composition, particle diameter of 10 µm;
particles consisting of TiO₂₋ₓ - 39 wt.% of the filler composition, particle diameter of 50 nm.

The composition satisfies the expression according to the formula II:

(([Cu] ·Rb)/([TiO₂₋ₓ]·Ra))+(([Zn] ·Rc)/([TiO₂₋ₓ] ·Ra))+(([Ag] ·Rd)/([TiO₂₋ₓ] ·Ra)) = 2,54

### Example 3 - filler composition:

particles consisting of AgNO₃ - 3 wt.% of the filler composition, particle diameter of 20 µm;
particles consisting of CuSO₄- 10 wt.% of the filler composition, particle diameter of 5 µm;
particles consisting of ZnO - 60 wt.% of the filler composition, particle diameter of 3 µm;
particles consisting of TiO₂₋ₓ - 27 wt.% of the filler composition, particle diameter of 1 µm.

The composition satisfies the expression according to the formula II:

(([Cu]·Rb)/([TiO₂₋ₓ]·Ra))+(([Zn]·Rc)/([TiO₂₋ₓ]·Ra))+(([Ag]·Rd)/([TiO₂₋ₓ]·Ra)) = 2,92

### Example 4 - filler composition:

particles consisting of AgNO₃ - 1 wt.% of the filler composition, particle diameter of 1 µm;
particles consisting of CuO - 10 wt.% of the filler composition, particle diameter of 1 µm;
particles consisting of ZnO - 60 wt.% of the filler composition, particle diameter of 3 µm;
particles consisting of TiO₂₋ₓ - 29 wt.% of the filler composition, particle diameter of 100 nm.

The composition satisfies the expression according to the formula II:

(([Cu] ·Rb)/([TiO₂₋ₓ]·Ra))+(([Zn] ·Rc)/([TiO₂₋ₓ] ·Ra))+(([Ag] ·Rd)/([TiO₂₋ₓ] ·Ra)) = 3,01

### Examples of production of the composite material:

### Example 6 - composite material:

With the technology of high-pressure injection moulding, the filler composition of Example 1 in an amount of 20% by volume of the composite material produced was added to polyamide granulate.

### Example 7 - composite material:

The filler composition of Example 4 in an amount of 50 % by volume of the composite material produced was added to epoxy resin.

### Example 11 - composite material:

With the technology of low-pressure moulding, the filler composition of Example 5 in an amount of 40 % by volume of the composite material produced was added to mixture of polyamide granulate and epoxy resins.

All the composite materials produced this way were characterised by properties showing a shortened life time of viruses on their surface or inhibiting further spread of viruses.

Such plastics in the form of composite materials can be used to mould overlays for everyday objects. Overlays can be in the form of flexible or semi-flexible plates or shaped articles adapted to the surface of the object on which they are to be mounted. In these overlays, there is an active (antiseptic, including antiviral) side and an assembly side (covered with an adhesive coating that allows the assembly on the surface of everyday objects on which there may be an exchange of micro-organisms and viruses between people (door handles, handrails, sanitary devices, electrical connectors, etc.).

Overlays can be present in versions for assembling on flat surfaces, or slightly convex and concave surfaces (e.g. sanitary appliances, electrical connectors), on which they are assembled with adhesives or double-sided tapes or by mechanical self-tightening or joining these elements. They can be used in various shapes and thicknesses. They may appear in the version with the product logo in the place marked for this.

The overlays can also appear in the version for assembling on cylindrical or similar surfaces, such as door handles, handrails, they are assembled with adhesives, double-sided tapes, self-tightening and Velcro. They are used in various shapes and thicknesses. They may appear in the version with the product logo in the place marked for this.
Fig. 1 shows an embodiment of an overlay for use on flat or similar surfaces in front, top, side and axonometric views thereof, with marked locations for the logo of the product 1 and for an assembly element 2.
Fig. 2 shows possible variants of shapes of overlays used on flat or similar surfaces, with marked location for the logo of the product 1.
Fig. 3 shows an embodiment of an overlay used on cylindrical or similar surfaces in front, top, side and axonometric views thereof, with marked location for the logo of the product 1.
Fig. 4 shows possible variants of shapes of overlays used on cylindrical or similar surfaces, with marked location for the logo of the product 1.
Fig. 5 shows an exemplary method of assembling an overlay on cylindrical or similar surfaces by means of adhesive, double-sided tape or Velcro, with marked possible locations for placing assembly elements 2 (adhesive, tape, Velcro) and the logo of the product 1.

Such overlays may be conveniently applied onto objects, rendering their surfaces antiseptic, and the overlays may also be conveniently removed from the objects and replaced with new ones over time.

## Claims

1. A filler composition for plastic, comprising
particles with silver (Ag), each comprising not less than 0.1 wt.% of silver,
particles with copper (Cu), each comprising not less than 0.5 wt.% of copper, and
particles with zinc (Zn), each comprising not less than 0.5 wt.% of zinc,
the particles having a particle size of 50 nm to 10 µm,
**characterised in that**
said particles with silver (Ag) are made entirely of silver (Ag) and/or a bonded form of silver (Ag), said particles with copper (Cu) are made entirely of copper (Cu) and/or a bonded form of copper (Cu), said particles with zinc (Zn) are made entirely of zinc (Zn) and/or a bonded form of zinc (Zn),
wherein said filler composition further comprises at least 10 wt.% of titanium oxide (TiO₂₋ₓ) particles, each consisting essentially of titanium oxide in the crystalline form of anatase with oxygen vacancies, according to Formula I:
TiO₂₋ₓ (Formula I)
wherein: x represents a number of oxygen vacancies, wherein x has a value of 0.001 to 0.1,
wherein the titanium oxide (TiO₂₋ₓ) particles have a particle size of 50 nm to 10 µm,
and wherein silver (Ag), copper (Cu), zinc (Zn) and titanium oxide (TiO₂₋ₓ), are contained in said composition in amounts for which the expression of Formula II is satisfied:
2 ≤ (([Cu] ·Rb)/([TiO₂₋ₓ]·Ra))+(([Zn] ·Rc)/([TiO₂₋ₓ] ·Ra))+(([Ag] ·Rd)/([TiO₂₋ₓ] ·Ra)) ≤ 5 (Formula II)
wherein:
2, 5 - numerical values;
[Cu], [Ag], [Zn], [TiO₂₋ₓ] - concentrations of copper (Cu), zinc (Zn), silver (Ag) and titanium oxide (TiO₂₋ₓ), respectively, in the filler composition, expressed in [wt.%],
Ra, Rb, Rc, Rd - variables representing:
Ra = 4·In[TiO2-x]; Rb = 15·In[Cu]; Rc = 5·In[Zn]; and Rd = 20·In[Ag].

2. The composition according to any of the preceding claims, **characterized in that** the particles with silver and/or the particles with copper, and/or the particles with zinc comprise the metal(s) in the bonded form, wherein the bonded form further comprising at least one non-metallic element selected from the group consisting of oxygen (O), carbon (C), sulphur (S), nitrogen (N), phosphorus (P), and chlorine (Cl).

3. A method for preparing a filler composition wherein, to obtain antiseptic properties, the method comprises mixing together
particles with silver (Ag), each comprising not less than 0.1 wt. % of silver,
particles with copper (Cu), each comprising not less than 0.5 wt. % of copper,
particles with zinc (Zn), each comprising not less than 0.5 wt. % of zinc,
said particles with silver (Ag) are made entirely of silver (Ag) and/or a bonded form of silver (Ag), said particles with copper (Cu) are made entirely of copper (Cu) and/or a bonded form of copper (Cu), said particles with zinc (Zn) are made entirely of zinc (Zn) and/or a bonded form of zinc (Zn),
and
particles of titanium oxide (TiO₂₋ₓ), each consisting essentially of titanium oxide (TiO₂₋ₓ) in the crystalline form of anatase with oxygen vacancies, according to Formula I:
TiO₂₋ₓ (Formula I)
wherein: x represents a number of oxygen vacancies, wherein x has a value of 0.001 to 0.1,
said particles having a particle size of 50 nm to 10 µm,
in amounts for which the expression of Formula II is satisfied:
2 ≤ (([Cu]·Rb)/([TiO₂₋ₓ]·Ra))+(([Zn]·Rc)/([TiO₂₋ₓ] ·Ra))+(([Ag] ·Rd)/([TiO₂₋ₓ] ·Ra)) ≤ 5 (Formula II)
wherein:
2, 5 - numerical values;
[Cu], [Ag], [Zn], [TiO₂₋ₓ] - concentrations of copper (Cu), zinc (Zn), silver (Ag) and titanium oxide (TiO₂₋ₓ), respectively, in the filler composition, expressed in [wt.%],
Ra, Rb, Rc, Rd - variables representing:
Ra = 4·In[TiO₂₋ₓ]; Rb = 15·In[Cu]; Rc = 5·In[Zn]; Rd = 20·In[Ag].

4. A plastic **characterised in that** it comprises the filler composition according to any one of claims 1 to 2, in an amount of 1 to 70 wt.% of the plastic mass.

5. The plastic according to claim 4, **characterised in that** it is in the form of a composite having a polymer as a matrix and the filler composition dispersed within the matrix.

6. The plastic according to claim 4 or 5, **characterised in that** the polymer matrix comprises, as its ingredients, a polyester resin and/or an epoxy resin, and/or polypropylene, and/or polyamide, and/or polylactide, and/or polyethylene, and/or polycarbonate, and/or polystyrene, and/or polyurethane, and/or polyester, and/or polyacrolein, and/or polyvinyl chloride, and/or polybutadiene, and/or copolymers thereof.

7. A shaped article, **characterised in that** it comprises at least on its surface, or is entirely made of, the plastic according to any one of claims 4 to 6.

8. The shaped article according to claim 7, **characterised in that** it is in the form of an overlay.

9. The shaped article according to claim 8, **characterised in that** the overlay comprises a layer of a self-adhesive material.

10. The shaped article according to any of claims 7 to 9, **characterised in that** it is deformable.

11. The shaped article according to any of claims 7 to 10, **characterised in that** it is flexible.

12. A method of producing a plastic shaped article, **characterised by** combining a mixture of ingredients for a thermoformable plastic with the filler composition according to any one of claims 1 to 2, and next processing the combination by injection moulding.

13. The method according to claim 12, **characterised by** processing the combination by high-pressure injection-moulding or low-pressure injection-moulding.

## Patentansprüche

1. Füllstoffzusammensetzung für Kunststoffe, umfassend
Partikel mit Silber (Ag), jeweils umfassend nicht weniger als 0,1 Gew.-% Silber,
Partikel mit Kupfer (Cu), jeweils umfassend nicht weniger als 0,5 Gew.-% Kupfer, und
Partikel mit Zink (Zn), jeweils umfassend nicht weniger als 0,5 Gew.-% Zink,
wobei die Partikel eine Partikelgröße von 50 nm bis 10 µm aufweisen,
**dadurch gekennzeichnet, dass**
die Partikel mit Silber (Ag) vollständig aus Silber (Ag) und/oder einer gebundenen Form von Silber (Ag) bestehen, die Partikel mit Kupfer (Cu) vollständig aus Kupfer (Cu) und/oder einer gebundenen Form von Kupfer (Cu) bestehen, die Partikel mit Zink (Zn) vollständig aus Zink (Zn) und/oder einer gebundenen Form von Zink (Zn) bestehen,
wobei die Füllstoffzusammensetzung ferner zumindest 10 Gew.-% Partikel aus Titanoxid (TiO₂₋ₓ) umfasst, die jeweils im Wesentlichen aus Titanoxid in der kristallinen Form von Anatase mit Sauerstoffleerstellen bestehen, gemäß Formel I:
TiO₂₋ₓ (Formel I),
wobei: x eine Anzahl an Sauerstoffleerstellen darstellt, wobei x einen Wert von 0,001 bis 0,1 aufweist,
wobei die Partikel aus Titanoxid (TiO₂₋ₓ) eine Partikelgröße von 50 nm bis 10 µm aufweisen,
und wobei Silber (Ag), Kupfer (Cu), Zink (Zn) und Titanoxid (TiO₂₋ₓ) in der Zusammensetzung in Mengen enthalten sind, für welche die Expression der Formel II erfüllt ist:
2 ≤ (([Cu]·Rb)/([TiO₂₋ₓ]·Ra))+(([Zn]·Rc)/([TiO₂₋ₓ]·Ra))+(([Ag]·Rd)/([TiO₂₋ₓ]·Ra)) ≤ 5 (Formel II),
wobei:
2, 5 - numerische Werte;
[Cu], [Ag], [Zn], [TiO₂₋ₓ] - jeweils Konzentrationen von Kupfer (Cu), Zink (Zn), Silber (Ag) und Titanoxid (TiO₂₋ₓ) in der Füllstoffzusammensetzung, ausgedrückt in [Gew.-%],
Ra, Rb, Rc, Rd - Variablen, darstellend:
Ra = 4·In[TiO2-x]; Rb = 15·In[Cu]; Rc = 5·In[Zn]; und Rd = 20·In[Ag].

2. Zusammensetzung nach einem der vorhergehenden Ansprüche, **dadurch gekennzeichnet, dass** die Partikel mit Silber und/oder die Partikel mit Kupfer und/oder die Partikel mit Zink das/die Metall(e) in der gebundenen Form umfassen, wobei die gebundene Form ferner zumindest ein nichtmetallisches Element umfasst, das aus der Gruppe ausgewählt ist, die aus Sauerstoff (O), Kohlenstoff (C), Schwefel (S), Stickstoff (N), Phosphor (P) und Chlor (Cl) besteht.

3. Verfahren zur Zubereitung einer Füllstoffzusammensetzung, wobei, um antiseptische Eigenschaften zu erhalten, das Verfahren Zusammenmischen von Folgendem umfasst
Partikeln mit Silber (Ag), jeweils umfassend nicht weniger als 0,1 Gew.-% Silber,
Partikeln mit Kupfer (Cu), jeweils umfassend nicht weniger als 0,5 Gew.-% Kupfer,
Partikeln mit Zink (Zn), jeweils umfassend nicht weniger als 0,5 Gew.-% Zink,
wobei die Partikel mit Silber (Ag) vollständig aus Silber (Ag) und/oder einer gebundenen Form von Silber (Ag) bestehen, die Partikel mit Kupfer (Cu) vollständig aus Kupfer (Cu) und/oder einer gebundenen Form von Kupfer (Cu) bestehen, die Partikel mit Zink (Zn) vollständig aus Zink (Zn) und/oder einer gebundenen Form von Zink (Zn) bestehen,
und
Partikeln aus Titanoxid (TiO₂₋ₓ), die jeweils im Wesentlichen aus Titanoxid (TiO₂₋ₓ) in der kristallinen Form von Anatase mit Sauerstoffleerstellen bestehen, gemäß Formel I:
TiO₂₋ₓ (Formel I),
wobei: x eine Anzahl an Sauerstoffleerstellen darstellt, wobei x einen Wert von 0,001 bis 0,1 aufweist,
wobei die Partikel eine Partikelgröße von 50 nm bis 10 µm aufweisen,
in Mengen, für welche die Expression der Formel II erfüllt ist:
2 ≤ (([Cu]·Rb)/([TiO₂₋ₓ]·Ra))+(([Zn]·Rc)/([TiO₂₋ₓ]·Ra))+(([Ag]·Rd)/([TiO₂₋ₓ]·Ra)) ≤ 5 (Formel II),
wobei:
2, 5 - numerische Werte;
[Cu], [Ag], [Zn], [TiO₂₋ₓ] - jeweils Konzentrationen von Kupfer (Cu), Zink (Zn), Silber (Ag) und Titanoxid (TiO₂₋ₓ) in der Füllstoffzusammensetzung, ausgedrückt in [Gew.-%],
Ra, Rb, Rc, Rd - Variablen, darstellend:
Ra = 4·In[TiO₂₋ₓ]; Rb = 15·In[Cu]; Rc = 5-In[Zn]; Rd = 20-In[Ag].

4. Kunststoff, **dadurch gekennzeichnet, dass** er die Füllstoffzusammensetzung nach einem der Ansprüche 1 bis 2 in einer Menge von 1 bis 70 Gew.-% der Kunststoffmasse umfasst.

5. Kunststoff nach Anspruch 4, **dadurch gekennzeichnet, dass** er in der Form eines Verbundstoffes mit einem Polymer als eine Matrix und der Füllstoffzusammensetzung dispergiert innerhalb der Matrix ist.

6. Kunststoff nach Anspruch 4 oder 5, **dadurch gekennzeichnet, dass** die Polymermatrix als ihre Bestandteile ein Polyesterharz und/oder ein Epoxidharz und/oder Polypropylen und/oder Polyamid und/oder Polylactid und/oder Polyethylen und/oder Polycarbonat und/oder Polystyrol und/oder Polyurethan und/oder Polyester und/oder Polyacrolein und/oder Polyvinylchlorid und/oder Polybutadien und/oder Copolymere davon umfasst.

7. Geformter Artikel, **dadurch gekennzeichnet, dass** er zumindest auf seiner Oberfläche den Kunststoff nach einem der Ansprüche 4 bis 6 umfasst oder vollständig daraus besteht.

8. Geformter Artikel nach Anspruch 7, **dadurch gekennzeichnet, dass** er in der Form einer Auflage ist.

9. Geformter Artikel nach Anspruch 8, **dadurch gekennzeichnet, dass** die Auflage eine Schicht aus einem selbstklebenden Material umfasst.

10. Geformter Artikel nach einem der Ansprüche 7 bis 9, **dadurch gekennzeichnet, dass** er verformbar ist.

11. Geformter Artikel nach einem der Ansprüche 7 bis 10, **dadurch gekennzeichnet, dass** er flexibel ist.

12. Verfahren zum Produzieren eines geformten Kunststoffartikels, **gekennzeichnet durch** Kombinieren einer Mischung von Bestandteilen für einen thermoformbaren Kunststoff mit der Füllstoffzusammensetzung nach einem der Ansprüche 1 bis 2 und als nächstes Verarbeiten der Kombination durch Spritzgießen.

13. Verfahren nach Anspruch 12, **gekennzeichnet durch** Verarbeiten der Kombination durch Hochdruckspritzgießen oder Niederdruckspritzgießen.

## Revendications

1. Composition de charge pour matière plastique, comprenant
des particules d'argent (Ag), comprenant chacune pas moins de 0,1 % en poids d'argent,
des particules de cuivre (Cu), comprenant chacune pas moins de 0,5 % en poids de cuivre, et
des particules de zinc (Zn), comprenant chacune pas moins de 0,5 % en poids de zinc,
les particules présentant une taille de particule de 50 nm à 10 µm,
**caractérisée en ce que**
lesdites particules d'argent (Ag) sont entièrement constituées d'argent (Ag) et/ou d'une forme liée d'argent (Ag), lesdites particules de cuivre (Cu) sont entièrement constituées de cuivre (Cu) et/ou d'une forme liée de cuivre (Cu), lesdites particules de zinc (Zn) sont entièrement constituées de zinc (Zn) et/ou d'une forme liée de zinc (Zn),
ladite composition de charge comprenant en outre au moins 10 % en poids de particules d'oxyde de titane (TiO₂₋ₓ), chacune étant essentiellement constituée d'oxyde de titane sous forme cristalline d'anatase avec des lacunes d'oxygène, selon la Formule I :
TiO₂₋ₓ (Formule I)
dans laquelle : x représente un nombre de lacunes d'oxygène, x possède une valeur de 0,001 à 0,1,
dans laquelle les particules d'oxyde de titane (TiO₂₋ₓ) présentent une taille de particule de 50 nm à 10 µm, et dans laquelle l'argent (Ag), le cuivre (Cu), le zinc (Zn) et l'oxyde de titane (TiO₂₋ₓ), sont contenus dans ladite composition en quantités pour lesquelles l'expression de Formule II est satisfaite :
2 ≤ (([Cu]·Rb)/([TiO₂₋ₓ]·Ra))+(([Zn]·Rc)/([TiO₂₋ₓ]·Ra))+(([Ag]·Rd)/([TiO₂₋ₓ]·Ra)) ≤ 5 (Formule II)
dans laquelle :
2, 5 - valeurs numériques ;
[Cu], [Ag], [Zn], [TiO₂₋ₓ] - concentrations de cuivre (Cu), de zinc (Zn), d'argent (Ag) et d'oxyde de titane (TiO₂₋ₓ) respectivement, dans la composition de charge, exprimées en [% en poids],
Ra, Rb, Rc, Rd - variables représentant :
Ra = 4·In[TiO2-x] ; Rb = 15·In[Cu] ; Rc = 5·In[Zn] ; et Rd = 20·In[Ag].

2. Composition selon l'une quelconque des revendications précédentes, **caractérisée en ce que** les particules d'argent et/ou les particules de cuivre, et/ou les particules de zinc comprennent le ou les métaux sous la forme liée, dans laquelle la forme liée comprenant en outre au moins un élément non métallique choisi dans le groupe constitué par l'oxygène (O), le carbone (C), le soufre (S), l'azote (N), le phosphore (P) et le chlore (Cl).

3. Procédé permettant de préparer une composition de charge dans lequel, pour obtenir des propriétés antiseptiques, le procédé comprend le mélange
de particules d'argent (Ag), comprenant chacune pas moins de 0,1 % en poids d'argent,
de particules de cuivre (Cu), comprenant chacune pas moins de 0,5 % en poids de cuivre,
de particules de zinc (Zn), comprenant chacune pas moins de 0,5 % en poids de zinc,
lesdites particules d'argent (Ag) sont entièrement constituées d'argent (Ag) et/ou d'une forme liée d'argent (Ag), lesdites particules de cuivre (Cu) sont entièrement constituées de cuivre (Cu) et/ou d'une forme liée de cuivre (Cu), lesdites particules de zinc (Zn) sont entièrement constituées de zinc (Zn) et/ou d'une forme liée de zinc (Zn),
et
de particules d'oxyde de titane (TiO₂₋ₓ), chacune étant constituée essentiellement d'oxyde de titane (TiO₂₋ₓ) sous forme cristalline d'anatase avec des lacunes d'oxygène, selon la Formule I :
TiO₂₋ₓ (Formule I)
dans laquelle : x représente un nombre de lacunes d'oxygène, x possède une valeur de 0,001 à 0,1,
lesdites particules présentant une taille de particule de 50 nm à 10 µm,
en quantités pour lesquelles l'expression de la Formule II est satisfaite :
2 ≤ (([Cu]·Rb)/([TiO₂₋ₓ]·Ra))+(([Zn]·Rc)/([TiO₂₋ₓ]·Ra))+(([Ag]·Rd)/([TiO₂₋ₓ]·Ra)) ≤ 5 (Formule II)
dans laquelle :
2, 5 - valeurs numériques ;
[Cu], [Ag], [Zn], [TiO₂₋ₓ] - concentrations de cuivre (Cu), de zinc (Zn), d'argent (Ag) et d'oxyde de titane (TiO₂₋ₓ) respectivement, dans la composition de charge, exprimées en [% en poids],
Ra, Rb, Rc, Rd - variables représentant :
Ra = 4·In[TiO₂₋ₓ] ; Rb = 15·In[Cu] ; Rc = 5·In[Zn] ; Rd = 20·In[Ag].

4. Matière plastique **caractérisée en ce qu'**elle comprend la composition de charge selon l'une quelconque des revendications 1 à 2, en une quantité de 1 à 70 % en poids de la masse de matière plastique.

5. Matière plastique selon la revendication 4, **caractérisée en ce qu'**elle se présente sous la forme d'un composite comportant un polymère comme matrice et la composition de charge dispersée dans la matrice.

6. Matière plastique selon l'une des revendications 4 ou 5, **caractérisée en ce que** la matrice polymère comprend, en tant qu'ingrédients, une résine polyester et/ou une résine époxy, et/ou le polypropylène, et/ou le polyamide, et/ou le polylactide, et/ou le polyéthylène, et/ou le polycarbonate, et/ou le polystyrène, et/ou le polyuréthane, et/ou le polyester, et/ou la polyacroléine, et/ou le chlorure de polyvinyle, et/ou le polybutadiène, et/ou des copolymères de ceux-ci.

7. Article façonné, **caractérisé en ce qu'**il comprend au moins sur sa surface, ou est entièrement constitué de, la matière plastique selon l'une quelconque des revendications 4 à 6.

8. Article façonné selon la revendication 7, **caractérisé en ce qu'**il se présente sous la forme d'un revêtement.

9. Article façonné selon la revendication 8, **caractérisé en ce que** le revêtement comprend une couche d'un matériau auto-adhésif.

10. Article façonné selon l'une quelconque des revendications 7 à 9, **caractérisé en ce qu'**il est déformable.

11. Article façonné selon l'une quelconque des revendications 7 à 10, **caractérisé en ce qu'**il est flexible.

12. Procédé de production d'un article façonné en matière plastique, **caractérisé par** la combinaison d'un mélange d'ingrédients pour une matière plastique thermoformable avec la composition de charge selon l'une quelconque des revendications 1 à 2, et ensuite le traitement de la combinaison par moulage par injection.

13. Procédé selon la revendication 12, **caractérisé par** le traitement de la combinaison par moulage par injection à haute pression ou moulage par injection à basse pression.
